# EUROPÄISCHE PATENTSCHRIFT

(11) **EP 2 926 092 B1**
(45) Veröffentlichungstag und Bekanntmachung des Hinweises auf die Patenterteilung: **28.06.2017**
(21) Anmeldenummer: 14701304.9
(22) Anmeldetag: 09.01.2014
(51) Int. Cl.: G01D 5/353

(54) **REDUNDANTE MESSUNG DER POSITION EINER STÖRUNG IM LICHTLEITER**
REDUNDANT DETERMINATION OF THE POSITION OF A DISTURBANCE WITHIN A LIGHT GUIDE
DÉTERMINATION REDONDANTE DE LA POSITION D'UNE PERTURBATION DANS UNE FIBRE OPTIQUE

(30) Priorität: 31.01.2013 DE 102013201626
(43) Veröffentlichungstag der Anmeldung: 07.10.2015
(73) Patentinhaber: Siemens Aktiengesellschaft, 80333 München (DE)
(72) Erfinder: EVERS, Bernhard, 38116 Braunschweig (DE)
(86) Internationale Anmeldenummer: PCT/EP2014/050300
(87) Internationale Veröffentlichungsnummer: WO 2014/117982

(56) Entgegenhaltungen:
- DE-A1-102009 060 727
- US-A- 5 355 208
- US-A1- 2008 232 242
- US-B1- 6 621 947

## Beschreibung

Die Erfindung betrifft eine Anordnung zum Überwachen einer linear strukturierten Einrichtung mit einem entlang der linear strukturierten Einrichtung verlaufenden Lichtwellenleiter-Strang, der an seinen beiden Enden mit jeweils einer Lichtsende- und Lichtempfangseinrichtung mit Auswerteeinrichtung versehen ist, wobei die Auswerteeinrichtungen bei einem Ereignis an der linear strukturierten Einrichtung ein Ereignissignal abgeben.

Eine Anordnung dieser Art ist in der veröffentlichten US-Patentanmeldung US 2011/0242525 A1 beschrieben. Bei dieser bekannten Anordnung ist eine linear strukturierte Einrichtung beispielsweise ein Eisenbahngleis oder eine elektrische Energieübertragungsleitung. Ein entlang der linear strukturierten Einrichtung verlaufender Lichtwellenleiter-Strang weist zwei als Sensoren wirkende Lichtwellenleiter auf, die parallel zueinander verlegt sind. An den voneinander abgewandten Enden der beiden Lichtwellenleiter ist jeweils eine Lichtsende- und Lichtempfangseinrichtung vorgesehen, um unter Auswertung von optischen Rückstreuungen auf die linear strukturierte Einrichtung einwirkende Ereignis erfassen zu können; diesen beiden Lichtsende- und Lichtempfangseinrichtungen ist jeweils eine Auswerteeinrichtung zugeordnet, die jeweils von einem Prozessor gebildet sind. Damit ist eine redundante Überwachung der linear strukturierten Einrichtung möglich, wenn die beiden Lichtwellenleiter über ihre gesamte Länge unbeschädigt sind. Sind beide Lichtwellenleiter an ein und derselben Stelle unterbrochen, dann kann ohne Redundanz der eine Abschnitt der linear strukturierten Einrichtung bis zur Unterbrechungsstelle der Lichtwellenleiter von dem einen Ende her und der verbleibende Abschnitt der linear strukturierten Einrichtung vom anderen Ende her mittels jeweils eines Lichtwellenleiters überwacht werden.

Der Erfindung liegt die Aufgabe zugrunde, eine Anordnung der eingangs angegebenen Art so auszugestalten, dass mit ihr die Ermittlung von sicherheitsrelevanten Funktionen an einer linear strukturierten Einrichtung mit einem Lichtwellenleiter-Strang zuverlässig überwacht werden kann.

Zur Lösung dieser Aufgabe sind bei der Anordnung der oben angegebenen Art erfindungsgemäß die Auswerteeinrichtungen so ausgebildet, dass sie an ihren Ausgängen als Ereignissignal ein die Entfernung zum Ort des Ereignisses angebendes Entfernungssignal abgeben, und die Ausgänge der Auswerteeinrichtungen sind an ein gemeinsames Summierglied angeschlossen, in dem die Entfernungssignale unter Gewinnung eines Summationssignals addiert werden; dem Summierglied ist eine Prüfeinrichtung nachgeordnet, die das Summationssignal mit einem Bezugssignal vergleicht und bei einer Differenz zwischen Summationssignal und Bezugsentfernungssignal eine Fehlermeldung abgibt.

Es ist zwar aus der britischen Patentschrift 1 497 995 eine Anordnung zum Überwachen eines Objektes mit zwei parallel verlaufenden Lichtwellenleitern bekannt, in die in zueinander entgegengesetzter Richtung Licht gesendet wird, jedoch handelt es sich hier um die Absicherung eines Areals, das durch die Lichtwellenleiter begrenzt wird. Die Einspeisung des Lichts erfolgt von einem Laser aus in nebeneinander liegende Enden der beiden Lichtwellenleiter, an deren anderen nebeneinander liegenden Enden Fotodetektoren mit nachgeordneten Verzögerungseinrichtungen angeordnet sind; durch Phasenvergleich mittels eines Doppelstrahloszilloskops wird die Stelle einer Störung am Rande des abgesicherten Areals ermittelt.

Ein wesentlicher Vorteil der erfindungsgemäße Anordnung besteht darin, dass mit ihr die Ermittlung sicherheitsrelevanter Funktionen der linear strukturierten Einrichtung mittels zweier voneinander unabhängiger Überwachungsvorgänge über den Lichtwellenleiter-Strang in einfacher Weise mittels eines Summiergliedes für die Ausgangsgrößen der Überwachungsvorgänge unter Bildung des Summationssignals erfolgt, weil als Ausgangsgrößen jeweils die Entfernung zum Ort des Ereignisses angebende Entfernungssignale verwendet werden. Hinzu kommt, dass es dann lediglich nur noch einer Prüfeinrichtung bedarf, um das Summationssignal mit dem Bezugssignal zu vergleichen und ggf. daraus die Fehlermeldung zu erzeugen. Die Fehlermeldung gibt dann an, dass die erfindungsgemäße Anordnung eine Störung bei der Ermittlung sicherheitsrelevanter Funktionen der linear strukturierten Einrichtung festgestellt hat.

Hinsichtlich der Bereitstellung des Bezugssignals kann die erfindungsgemäße Anordnung unterschiedlich ausgebildet sein. Bei einer vorteilhaften Ausgestaltung weist die Prüfeinrichtung einen Speicherbaustein auf, in dem als Bezugssignal ein der gesamten Länge des Lichtwellenleiter-Stranges entsprechendes Bezugsentfernungssignal gespeichert ist. Voraussetzung dafür ist, dass die gesamte Länge des Lichtwellenleiter-Stranges bekannt ist bzw. ermittelt worden ist.

Diesbezüglich anspruchsloser ist eine Ausführungsform der erfindungsgemäßen Anordnung, bei der die Prüfeinrichtung eine Speichereinheit aufweist, in der das jeweils aktuelle Summationssignal als Bezugssignal für einen Vergleich mit einem nachfolgend gebildeten Summationssignal gespeichert ist. Eine Längenbestimmung des Lichtwellenleiter-Stranges ist hier nicht erforderlich, weil Messergebnisse zeitlich hintereinander vorgenommener Überwachungsvorgänge miteinander verglichen werden.

Bei der erfindungsgemäßen Anordnung kann der Lichtwellenleiter-Strang zwei Lichtwellenleiter aufweisen, und es können mit gleicher Frequenz arbeitende Lichtsende- und Lichtempfangseinrichtungen vorhanden sein. Dies hat den Vorteil, dass Lichtsende- und Lichtempfangseinrichtungen desselben Typs verwendet werden können.

Es erscheint aber auch vorteilhaft, wenn der Lichtwellenleiter-Strang einen Lichtwellenleiter aufweist, und Lichtsendeund Lichtempfangseinrichtungen mit verschiedener Arbeitsfrequenz vorhanden sind. In diesem Falle wird vorteilhafterweise nur ein einziger Lichtwellenleiter benötigt.
Bei der erfindungsgemäßen Anordnung kann die linear strukturierte Einrichtung ganz unterschiedlicher Art sein; beispielsweise kann es sich um eine Pipeline handeln.
Bei einer besonders bevorzugten Ausführungsform der erfindungsgemäßen Anordnung ist die linear strukturierte Einrichtung ein Eisenbahngleis. Dies eröffnet nämlich beispielsweise die Möglichkeit, Gleisfreimeldungen unter Verwendung eines Lichtwellenleiter-Stranges sicher zu erbringen und auch kontinuierlich durchzuführen. In konventioneller Technik ist eine Gleisfreimeldung nur abschnittsweise möglich. Auch Zugtrennungen können so mit vergleichsweise geringem Aufwand erfasst werden.
Dabei ist es besonders vorteilhaft, wenn das Summierglied und die Prüfeinrichtung gesichert ausgeführt sind. Es erfolgt somit eine Trennung zwischen nicht sicheren und sicheren Anordnungsbestandteilen, wodurch die Zulassungsfähigkeit, die langfristige Wartung und auch die Instandhaltbarkeit der gesamten Anordnung verbessert sind. Ein weiterer Vorteil wird darin gesehen, dass der Einsatz der erfindungsgemäßen Anordnung in einem Eisenbahnsystem unabhängig vom Typ des jeweiligen Schienenfahrzeugs ist und auch keine zusätzliche fahrzeugseitige Ausrüstung erforderlich ist. Vorteilhaft ist ferner, dass die erfindungsgemäße Anordnung im Bereich aktueller und zukünftiger Zugsicherungssysteme einsetzbar ist und eine relativ geringe Störanfälligkeit gegenüber Umwelt- und Betriebseinflüssen aufweist.
Es kann ferner vorteilhaft sein, wenn die linear strukturierte Einrichtung eine Energieübertragungsleitung ist. In diesem Falle können beispielsweise Kurzschlussstellen zuverlässig geortet werden.

Die Erfindung bezieht sich ferner auf ein Verfahren zum Betreiben einer linear strukturierten Einrichtung mit einem entlang der linear strukturierten Einrichtung verlaufenden Lichtwellenleiter-Strang, der an seinen beiden Enden mit jeweils einer Lichtsende- und Lichtempfangseinrichtung mit Auswerteeinrichtung versehen ist, wobei die Auswerteeinrichtungen bei einem Ereignis in der linear strukturierten Einrichtung an ihren Ausgängen ein Ereignissignal abgeben. Ein solches Verfahren ist der eingangs bereits behandelten, veröffentlichen US-Patentanmeldung US 2011/0242525 A1 entnehmbar.

Um ein solches Verfahren so auszugestalten, dass mit ihm die Ermittlung von sicherheitsrelevanten Funktionen an einer linear strukturierten Einrichtung mit einem Lichtwellenleiter-Strang zuverlässig überwacht werden kann, werden erfindungsgemäß als Ereignissignale den Ort des Ereignisses angebende Entfernungssignale erzeugt und die Entfernungssignale unter Gewinnung eines Summationssignals addiert; das Summationssignal wird mit einem Bezugssignal verglichen, und es wird bei einer Differenz zwischen Summationssignal und Bezugsentfernungssignal eine Fehlermeldung erzeugt.

Mit dem erfindungsgemäßen Verfahren ergeben sich sinngemäß dieselben Vorteile, wie sie oben zur erfindungsgemäßen Anordnung aufgeführt sind.

Hinsichtlich der Bildung des Bezugssignals kann bei dem erfindungsgemäßen Verfahren in unterschiedlicher Weise vorgegangen werden. So wird es als vorteilhaft angesehen, wenn als Bezugssignal ein der gesamten Länge des Lichtwellenleiter-Stranges entsprechendes Bezugsentfernungssignal verwendet wird. Dieses Signal muss für eine vorgegebene Länge des Lichtwellenleiter-Stranges nur einmal ermittelt werden und kann danach immer für die Überwachung hinsichtlich Auftreten einer Fehlermeldung verwendet werde.
Es erscheint aber besonders vorteilhaft, das Summationssignal zu speichern und als abgeleitetes Bezugssignal für ein nachfolgend gebildetes Summationssignal zu verwenden.
Wegen eines geringen Aufwandes für die Lichtsende- und Lichtempfangseinrichtungen kann die linear strukturierte Einrichtung mit einem Lichtwellenleiter-Strang mit zwei Lichtwellenleitern versehen sein; in diesem Falle ist es vorteilhaft, mit gleicher Frequenz arbeitende Lichtsende- und Lichtempfangseinrichtungen einzusetzen.
Um mit einem relativ kostengünstigen Lichtwellenleiter-Strang arbeiten zu können, wird ein Lichtwellenleiter-Strang mit einem Lichtwellenleiter verwendet, und es werden dann Lichtsende- und Lichtempfangseinrichtungen mit verschiedener Arbeitsfrequenz eingesetzt.
Besonders vorteilhaft ist es ferner, wenn als linear strukturierte Einrichtung ein Eisenbahngleis verwendet wird. Entsprechendes gilt für eine Ausführungsform des erfindungsgemäßen Verfahrens, bei dem das Summierglied und die Prüfeinrichtung gesichert ausgeführt werden. Hinsichtlich der damit im Einzelnen erzielbaren Vorteile wird hier zur Vermeidung von Wiederholungen auf die obigen Ausführungen zur entsprechenden Ausgestaltung der erfindungsgemäßen Anordnung verwiesen. Vorteilhaft ist es ferner, wenn als linear strukturierte Einrichtung eine Energieübertragungsleitung verwendet wird.
Zur weiteren Erläuterung der Erfindung ist in
- Fig. 1: ein Ausführungsbeispiel der erfindungsgemäßen Anordnung mit einer linear strukturierten Einrichtung einem Lichtwellenleiter-Strang mit zwei Lichtwellenleitern und in
- Fig. 2: ein Ausführungsbeispiel mit einem Lichtwellenleiter-Strang mit einem einzigen Lichtwellenleiter
dargestellt.

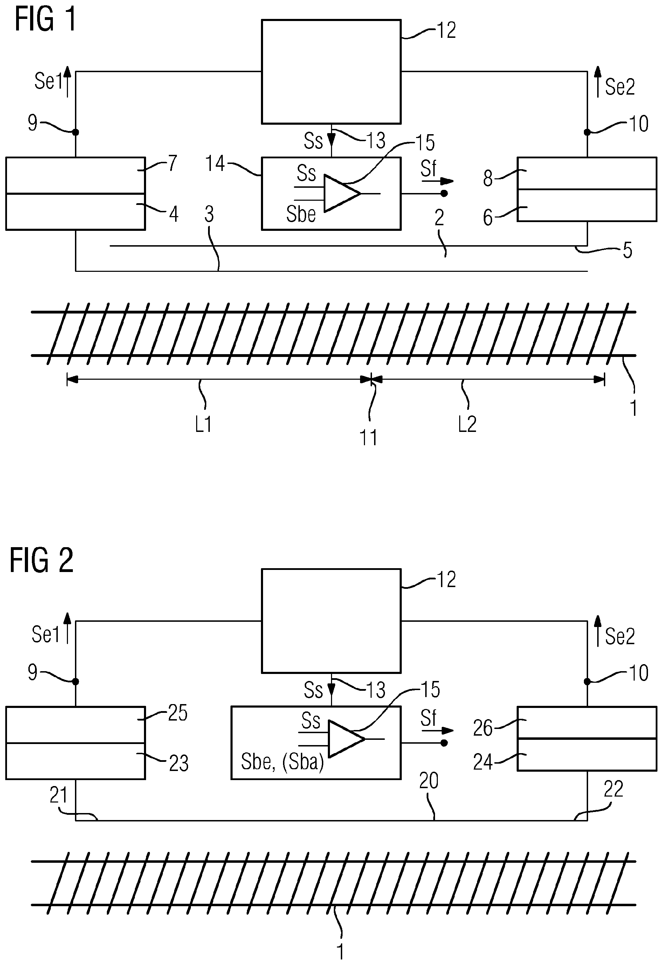

Fig. 1 zeigt als linear strukturierte Einrichtung ein Eisenbahngleis 1, neben dem ein Lichtwellenleiter-Strang 2 verlegt ist. Der Lichtwellenleiter-Strang 2 besteht aus einem ersten Lichtwellenleiter 3, der mit einer ersten Lichtsende- und Lichtempfangseinrichtung 4 verbunden ist. Ein zweiter Lichtwellenleiter 5 des Lichtwellenleiter-Strangs 2 verläuft neben dem ersten Lichtwellenleiter 3 und steht mit einer zweiten Lichtsende- und Lichtempfangseinrichtung 6 in Verbindung. Die Lichtwellenleiter 3 und 5 können auch im Eisenbahngleis 1 verlegt sein.

Jeder Lichtsende- und Lichtempfangseinrichtung 4 bzw. 6 ist eine Auswerteeinrichtung 7 bzw. 8 zugeordnet, die jeweils so ausgebildet sind, dass sie an ihren Ausgängen 9 und 10 jeweils ein elektrisches Entfernungssignal Se1 und Se2 abgeben. Außerdem sind die Lichtsende- und Lichtempfangseinrichtung 4 bzw. 6 und Auswerteeinrichtungen 7 bzw. 8 in einer hier nicht zu beschreibenden Weise ausgebildet, dass sich mit ihnen Funktionen der linear strukturierten Einrichtung bzw. des Betriebs auf dem Eisenbahngleis überwachen lassen.

Befindet sich beispielsweise ein nicht dargestelltes Schienenfahrzeug an einer Position 11 auf dem Eisenbahngleis 1, dann hat es eine Entfernung L1 vom Ort der ersten Lichtsendeund Lichtempfangseinrichtung 4 und eine Entfernung L2 vom Ort der zweiten Lichtsende- und Lichtempfangseinrichtung 6. Das von der ersten und der zweiten Lichtsende- und Lichtempfangseinrichtung 4 bzw. 6 ausgesandte Licht wird daher am Ort 11 jeweils reflektiert, weil das Schienenfahrzeug am Ort 11 durch von ihm erzeugte Schalldruckwellen eine Inhomogenität in den Lichtwellenleitern 3 und 5 hervorruft. Das reflektierte Licht wird über die beiden Lichtwellenleiter 3 und 5 jeweils für sich von den Lichtsende- und Lichtempfangseinrichtungen 4 und 6 erfasst und in den zugeordneten Auswerteeinrichtung 7 und 8 in hier interessierender Weise in die Entfernungssignale Se1 und Se2 umgesetzt. Die Größe der Entfernungssignale Se1 und Se2 entspricht den beiden Entfernungen L1 und L2.

An die Ausgänge 9 und 10 der beiden Auswerteeinrichtungen 7 und 8 ist ein Summierglied 12 angeschlossen, in dem aus den beiden Entfernungssignalen Se1 und Se2 ein Summationssignal Ss gebildet wird; dieses Summationssignal Ss steht an einem Ausgang 13 an und wird zu einer Prüfeinrichtung 14 übertragen.

In der Prüfeinrichtung 14 wird das Summationssignal Ss mit einem Bezugssignal verglichen, das als Bezugsentfernungssignal Sbe in einem nicht dargestellten Speicherbaustein der Prüfeinrichtung 14 gespeichert ist und in seiner Größe der gesamten Länge des Lichtwellenleiter-Stranges 2 entspricht. In einem nur schematisch dargestellten Vergleicher 15 wird das Bezugsentfernungssignal Sbe mit dem Summationssignal Ss verglichen. Wird eine vorgegebene Vergleichstoleranz - die beispielsweise wegen eines nicht exakt parallelen Verlaufs der Lichtwellenleiter 3 und 5 vorgesehen ist - überschritten, dann wird am Ausgang der Prüfeinrichtung 14 eine Fehlermeldung Sf erzeugt und damit signalisiert, die zeitparallel durchgeführte Überwachung der Funktionen der linear strukturierten Einrichtung fehlerhaft ist und somit der Eisenbahnbetrieb auf dem Gleis 1 nicht sicher kontrolliert wird.

Bei einer anderen Ausführungsform der erfindungsgemäßen Anordnung bzw. des erfindungsgemäßen Verfahrens wird als Bezugssignal ein aus dem Summationssignal Ss in folgender Weise abgeleitetes Bezugssignal Sba (in Fig. 1 in Klammern eingefügt) verwendet: Ist im Betrieb der erfindungsgemäßen Anordnung ein Summationssignal Ss gebildet, dann wird dieses Summationssignal in einer nicht dargestellten Speichereinheit der Prüfeinrichtung 14 gespeichert. Tritt in einem nachfolgenden Überwachungszyklus ein weiteres Summationssignal auf, das in der Regel auf einer Ortsveränderung des Schienenfahrzeugs auf dem Eisenbahngleis 1 beruht, dann wird dieses weitere Summationssignal mit dem abgeleiteten Bezugssignal Sba verglichen und bei Abweichungen die Fehlermeldung erzeugt.

Das Ausführungsbeispiel gemäß Fig. 2 unterscheidet sich von dem nach Fig. 1 zunächst insofern, als der neben dem Eisenbahngleis 1 verlaufende Lichtwellenleiter-Strang aus einem einzigen Lichtwellenleiter 20 besteht, an dessen beiden Enden 21 und 22 jeweils eine Lichtsende- und Lichtempfangseinrichtungen 23 und 24 mit jeweils einer zugeordneten Auswerteeinrichtung 25 und 26 vorgesehen ist. Die Lichtsende- und Lichtempfangseinrichtungen 23 und 24 haben hier verschiedene Arbeitsfrequenzen. Ansonsten sind der Aufbau und die Arbeitsweise dieses Ausführungsbeispiels mit dem nach Fig. 1 identisch, so dass für die übrigen Bestandteile des Ausführungsbeispiels nach Fig. 2 mit dem nach Fig. 1 gleiche Bezugszeichen verwendet sind.

## Patentansprüche

1. Anordnung mit einer linear strukturierten Einrichtung (1) mit einem entlang der linear strukturierten Einrichtung (1) verlaufenden Lichtwellenleiter-Strang (2), der an seinen beiden Enden mit jeweils einer Lichtsende- und Lichtempfangseinrichtung (4,6) mit zugeordneter Auswerteeinrichtung (7,8) versehen ist, wobei die Auswerteeinrichtungen (7,8) bei einem Ereignis an der linear strukturierten Einrichtung (1) ein Ereignissignal (Se1, Se2) abgeben,
**dadurch gekennzeichnet, dass**
• die Auswerteeinrichtungen (7,8) so ausgebildet sind, dass sie an ihren Ausgängen (9,10) als Ereignissignal ein die Entfernung zum Ort des Ereignisses angebendes Entfernungssignal (Se1,Se2) abgeben,
• die Ausgänge (9,10) der Auswerteeinrichtungen (7,8) an ein gemeinsames Summierglied (12) angeschlossen sind, in dem die Entfernungssignale (Se1,Se2) unter Gewinnung eines Summationssignals (Ss) addiert werden, und
• dem Summierglied (12) eine Prüfeinrichtung (14) nachgeordnet ist, die das Summationssignal (Ss) mit einem Bezugssignal (Sbe;Sba) vergleicht und bei einer Differenz zwischen Summationssignal (Ss) und Bezugssignal (Sbe;Sba) eine Fehlermeldung (Sf) abgibt.

2. Anordnung nach Anspruch 1,
**dadurch gekennzeichnet, dass**
• die Prüfeinrichtung (14) einen Speicherbaustein aufweist, in dem als Bezugssignal ein der gesamten Länge des Lichtwellenleiter-Stranges(2) entsprechendes Bezugsentfernungssignal (Sbe) gespeichert ist.

3. Anordnung nach Anspruch 1,
**dadurch gekennzeichnet, dass**
• die Prüfeinrichtung (14) eine Speichereinheit aufweist, in der das jeweils aktuelle Summationssignal (Ss) als Bezugssignal (Sba) für einen Vergleich mit einem nachfolgend gebildeten Summationssignal (Ss) gespeichert ist.

4. Anordnung nach einem der vorangehenden Ansprüche,
**dadurch gekennzeichnet, dass**
• der Lichtwellenleiter-Strang (2) zwei Lichtwellenleiter (3,5) aufweist und
• mit gleicher Frequenz arbeitende Lichtsende- und Lichtempfangseinrichtungen (4,6) vorhanden sind.

5. Anordnung nach einem der Ansprüche 1 bis 3,
**dadurch gekennzeichnet, dass**
• der Lichtwellenleiter-Strang einen Lichtwellenleiter (20) aufweist und
• Lichtsende- und Lichtempfangseinrichtungen (23,24) mit verschiedener Frequenz vorhanden sind.

6. Anordnung nach einem der vorangehenden Ansprüche,
**dadurch gekennzeichnet, dass**
• die linear strukturierte Einrichtung ein Eisenbahngleis (1) ist.

7. Anordnung nach Anspruch 6,
**dadurch gekennzeichnet, dass**
• das Summierglied (12) und die Prüfeinrichtung (14) gesichert ausgeführt sind.

8. Anordnung nach einem der Ansprüche 1 bis 5,
**dadurch gekennzeichnet, dass**
• die linear strukturierte Einrichtung eine Energieübertragungsleitung ist.

9. Verfahren zum Betreiben einer linear strukturierten Einrichtung (1) mit einem entlang der linear strukturierten Einrichtung (1) verlaufenden Lichtwellenleiter-Strang (2), der an seinen beiden Enden mit jeweils einer Lichtsende- und Lichtempfangseinrichtung (4,6) mit zugeordneter Auswerteeinrichtung (7,8) versehen ist, wobei die Auswerteeinrichtungen (7,8) bei einem Ereignis in der linear strukturierten Einrichtung (1) an ihren Ausgängen (9,10) ein Ereignissignal (Se1,Se2) abgeben,
**dadurch gekennzeichnet, dass**
• als Ereignissignale den Ort des Ereignisses angebende Entfernungssignale (Se1,Se2) erzeugt werden,
• die Entfernungssignale (Se1,Se2) unter Gewinnung eines Summationssignals (Ss) addiert werden,
• das Summationssignal (Ss) mit einem Bezugssignal (Sbe;Sba) verglichen wird und
• bei einer Differenz zwischen Summationssignal (Ss) und Bezugssignal (Sbe;Sba) eine Fehlermeldung (Sf) erzeugt wird.

10. Verfahren nach Anspruch 9,
**dadurch gekennzeichnet, dass**
• als Bezugssignal ein der gesamten Länge des Lichtwellenleiter-Stranges (2) entsprechendes Bezugsentfernungssignal (Sbe) verwendet wird.

11. Verfahren nach Anspruch 9,
**dadurch gekennzeichnet, dass**
• das Summationssignal (Ss) gespeichert wird und
• als abgeleitetes Bezugssignal (Sba) für ein nachfolgend gebildetes Summationssignal (Ss) verwendet wird.

12. Verfahren nach einem der Ansprüche 9 bis 11,
**dadurch gekennzeichnet, dass**
• ein Lichtwellenleiter-Strang (2) mit zwei Lichtwellenleitern (3,5) verwendet wird und
• mit gleicher Frequenz arbeitende Lichtsende- und Lichtempfangseinrichtungen (4,6) eingesetzt werden.

13. Verfahren nach einem der Ansprüche 9 bis 11,
**dadurch gekennzeichnet, dass**
• ein Lichtwellenleiter-Strang mit einen Lichtwellenleiter (20) verwendet wird und
• Lichtsende- und Lichtempfangseinrichtungen (23,24) mit verschiedener Frequenz eingesetzt werden.

14. Verfahren nach einem der Ansprüche 9 bis 13,
**dadurch gekennzeichnet, dass**
• als linear strukturierte Einrichtung ein Eisenbahngleis (1) verwendet wird.

15. Verfahren nach Anspruch 14,
**dadurch gekennzeichnet, dass**
• das Summierglied (12) und die Prüfeinrichtung (14) gesichert ausgeführt werden.

16. Verfahren nach einem der Ansprüche 9 bis 13,
**dadurch gekennzeichnet, dass**
• als linear strukturierte Einrichtung eine Energieübertragungsleitung verwendet wird.

## Claims

1. An arrangement with a linearly structured device (1) having an optical waveguide cable (2) which runs along the linearly structured device (1) and which at both ends is provided with a light transmission and light reception device (4, 6) respectively, with an associated evaluation device (7, 8), wherein in the case of an event in proximity to the linearly structured device (1) the evaluation devices (7, 8) emit an event signal (Se1, Se2),
**characterised in that**
• the evaluation devices (7, 8) are designed such that at their outputs (9, 10) they emit a distance signal (Se1, Se2) indicating the distance to the location of the event as an event signal,
• the outputs (9, 10) of the evaluation devices (7, 8) are connected to a common summator (12) in which the distance signals (Se1, Se2) are added to obtain a summed signal (Ss), and
• the summator (12) has a checking device (14) arranged downstream that compares the summed signal (Ss) with a reference signal (Sbe; Sba) and outputs an error message (Sf) in the event of a difference between the summed signal (Ss) and the reference signal (Sbe; Sba).

2. The arrangement as claimed in claim 1,
**characterised in that**
• the checking device (14) has a memory module in which a reference distance signal (Sbe) corresponding to the entire length of the optical waveguide cable (2) is stored as a reference signal.

3. The arrangement as claimed in claim 1,
**characterised in that**
• the checking device (14) has a memory unit in which the respective current summed signal (Ss) is stored as a reference signal (Sba) for a comparison with a subsequently formed summed signal (Ss).

4. The arrangement as claimed in one of the preceding claims,
**characterised in that**
• the optical waveguide cable (2) has two optical waveguides (3, 5), and
• light transmission and light reception devices (4, 6) working with the same frequency are present.

5. The arrangement as claimed in one of claims 1 to 3,
**characterised in that**
• the optical waveguide cable has one optical waveguide (20), and
• light transmission and light reception devices (23, 24) with a different frequency are present.

6. The arrangement as claimed in one of the preceding claims,
**characterised in that**
• the linearly structured device is a railway track (1).

7. The arrangement as claimed in claim 6,
**characterised in that**
• the summator (12) and the checking device (14) are designed in a fail-safe manner.

8. The arrangement as claimed in one of claims 1 to 5,
**characterised in that**
• the linearly structured device is a power transmission line.

9. A method for operating a linearly structured device (1) having an optical waveguide cable (2) that runs along the linearly structured device (1) and which at both ends is provided with a light transmission and light reception device (4, 6) respectively, with an associated evaluation device (7, 8), wherein in the case of an event in the linearly structured device (1) the evaluation devices (7, 8) emit an event signal (Se1, Se2) at their outputs (9, 10),
**characterised in that**
• distance signals (Se1, Se2) indicating the location of the event are generated as event signals,
• the distance signals (Se1, Se2) are added to obtain a summed signal (Ss),
• the summed signal (Ss) is compared to a reference signal (Sbe; Sba) and
• an error message (Sf) is generated in the event of a difference between the summed signal (Ss) and the reference signal (Sbe; Sba).

10. The method as claimed in claim 9,
**characterised in that**
• a reference distance signal (Sbe) corresponding to the entire length of the optical waveguide cable (2) is used as a reference signal.

11. The method as claimed in claim 9,
**characterised in that**
• the summed signal (Ss) is stored and
• is used as a derived reference signal (Sba) for a subsequently formed summed signal (Ss).

12. The method as claimed in one of claims 9 to 11,
**characterised in that**
• an optical waveguide cable (2) having two optical waveguides (3, 5) is used, and
• light transmission and light reception devices (4, 6) working at the same frequency are used.

13. The method as claimed in one of claims 9 to 11,
**characterised in that**
• an optical waveguide cable having one optical waveguide (20) is used and
• light transmission devices and light reception devices (23, 24) with a different frequency are used.

14. The method as claimed in one of claims 9 to 13,
**characterised in that**
• a railway track (1) is used as a linearly structured device.

15. The method as claimed in claim 14,
**characterised in that**
• the summator (12) and the checking device (14) are designed in a fail-safe manner.

16. The method as claimed in one of claims 9 to 13,
**characterised in that**
• a power transmission line is used as a linearly structured device.

## Revendications

1. Agencement comprenant un dispositif (1) structuré linéairement, ayant une ligne (2) de fibre optique, qui s'étend le long du dispositif (1) structuré linéairement et qui est pourvue, à ses deux extrémités, respectivement d'un dispositif (4, 6) d'émission de lumière et de réception de lumière à dispositif (7, 8) d'exploitation associé, les dispositifs (7, 8) d'exploitation émettant un signal (Se1, Se2) d'évènement, s'il se produit un évènement sur le dispositif (1) structuré linéairement,
**caractérisé en ce que**
• les dispositifs (7, 8) d'exploitation sont constitués de manière à émettre à leur sortie (9, 10), comme signal d'évènement, un signal (Se1, Se2) d'éloignement indiquant la distance à l'emplacement de l'évènement,
• les sorties (9, 10) des dispositifs (7, 8) d'exploitation sont raccordés par un élément (12) de sommation commun, dans lequel les signaux (Se1, Se2) d'éloignement sont additionnés en obtenant un signal (Ss) de sommation et
• en aval de l'élément (12) de sommation est monté un dispositif (14) de contrôle, qui compare le signal (Ss) de sommation à un signal (Sbe ; Sba) de référence et qui, s'il y a une différence entre le signal (Ss) de sommation et le signal (Sbe ; Sba) de référence, émet un message (Sf) de défaut.

2. Agencement suivant la revendication 1
**caractérisé en ce que**
• le dispositif (14) de contrôle a un module de mémorisation, dans lequel est mémorisé, comme signal de référence, un signal (Sbe) d'éloignement de référence correspondant à toute la longueur de la ligne (2) de fibre optique.

3. Agencement suivant la revendication 1,
**caractérisé en ce que**
• le dispositif (14) de contrôle a une unité de mémorisation, dans laquelle le signal (Ss) de sommation en cours est mémorisé comme signal (Sba) de référence pour une comparaison à un signal (Ss) de sommation formé ensuite.

4. Agencement suivant l'une des revendications précédentes,
**caractérisé en ce que**
• la ligne (2) de fibre optique a deux fibres (3, 5) optiques et
• il y a des dispositifs (4, 6) d'émission de lumière et de réception de lumière fonctionnant à la même fréquence.

5. Agencement suivant l'une des revendications 1 à 3,
**caractérisé en ce que**
• la ligne de fibre optique a une fibre (20) optique et
• il y a des dispositifs (23, 24) d'émission de lumière et de réception de lumière ayant une fréquence différente.

6. Agencement suivant l'une des revendications précédentes,
**caractérisé en ce que**
• le dispositif structuré linéairement est une voie (1) de chemin de fer.

7. Agencement suivant la revendication 6,
**caractérisé en ce que**
• l'élément (12) de sommation et le dispositif (14) de contrôle sont réalisés de manière sécurisée.

8. Agencement suivant l'une des revendications 1 à 5,
**caractérisé en ce que**
• le dispositif structuré linéairement est une ligne de transport d'énergie.

9. Procédé pour faire fonctionner un dispositif (1) structuré linéairement, comprenant une ligne (2) de fibre optique, qui s'étend le long du dispositif (1) structuré linéairement et qui est pourvue à ses deux extrémités respectivement d'un dispositif (4, 6) d'émission de lumière et de réception de lumière à un dispositif (7, 8) d'exploitation associé, les dispositifs (7, 8) d'exploitation émettant, s'il se produit un évènement dans le dispositif (1) structuré linéairement, un signal (Se1, Se2) d'évènement à leur sortie (9, 10),
**caractérisé en ce que**
• on produit comme signaux d'évènement des signaux (Se1, Se2) d'éloignement indiquant l'emplacement de l'évènement,
• on additionne les signaux (Se1, Se2) d'éloignement en obtenant un signal (Ss) de sommation,
• on compare le signal (Ss) de sommation à un signal (Sbe ; Sba) de référence et
• s'il y a une différence entre le signal (Ss) de sommation et le signal (Sbe, Sba) de référence, on produit un message (Sf) de défaut.

10. Procédé suivant la revendication 9,
**caractérisé en ce que**
• on utilise comme signal de référence un signal (Sbe) d'éloignement de référence correspondant à toute la longueur de la ligne (2) de fibre optique.

11. Procédé suivant la revendication 9,
**caractérisé en ce que**
• on mémorise le signal (Ss) de sommation et
• on utilise comme signal (Sba) de référence dérivé pour un signal (Ss) de sommation formé ensuite.

12. Procédé suivant l'une des revendications 9 à 11,
**caractérisé en ce que**
• on utilise une ligne (2) de fibre optique ayant deux fibres (3, 5) optiques et
• on met en oeuvre des dispositifs (4, 6) d'émission de lumière et de réception de lumière fonctionnant à une même fréquence.

13. Procédé suivant l'une des revendications 9 à 11,
**caractérisé en ce que**
• on utilise une ligne de fibre optique ayant une fibre (20) optique et
• on met en oeuvre des dispositifs (23, 24) d'émission de lumière et de réception de lumière à une fréquence différente.

14. Procédé suivant l'une des revendications 9 à 13,
**caractérisé en ce que**
• on utilise une voie (1) de chemin de fer comme dispositif structuré linéairement.

15. Procédé suivant la revendication 14,
**caractérisé en ce que**
• on réalise l'élément (12) de sommation et le dispositif (14) de contrôle d'une manière sécurisée.

16. Procédé suivant l'une des revendications 9 à 13,
**caractérisé en ce que**
• on utilise une ligne de transport d'énergie comme dispositif structuré linéairement.
